# EUROPÄISCHE PATENTSCHRIFT

(11) **EP 1 954 388 B1**
(45) Veröffentlichungstag und Bekanntmachung des Hinweises auf die Patenterteilung: **30.05.2018**
(21) Anmeldenummer: 06819794.6
(22) Anmeldetag: 28.11.2006
(51) Int. Cl.: B01J 19/10, B01J 19/00, B01J 19/26

(54) **VORRICHTUNG ZUR BESCHALLUNG VON FLÜSSIGKEITEN MIT NIEDERFREQUENZ-LEISTUNGS-ULTRASCHALL**
DEVICE FOR SONICATING LIQUIDS WITH LOW-FREQUENCY HIGH ENERGY ULTRASOUND
DISPOSITIF POUR L'IRRADIATION AUX ULTRASONS DE LIQUIDES AU L'AIDE D'ULTRASONS BASSE FREQUENCE

(30) Priorität: 28.11.2005 DE 102005057333
(43) Veröffentlichungstag der Anmeldung: 13.08.2008
(73) Patentinhaber: Dr. Hielscher GmbH, 14513 Teltow (DE)
(72) Erfinder: HIELSCHER, Harald, 14532 Stahnsdorf (DE); HIELSCHER, Holger, 14513 Teltow (DE); HIELSCHER, Thomas, 14532 Stahnsdorf (DE)
(74) Vertreter: Gulde & Partner
(86) Internationale Anmeldenummer: PCT/EP2006/068969
(87) Internationale Veröffentlichungsnummer: WO 2007/060245

(56) Entgegenhaltungen:
- WO-A-02/46092
- WO-A-2006/130237
- DE-C1- 3 922 299
- DE-C1- 19 517 381
- US-A1- 2005 260 106
- US-B1- 6 505 648
- US-B1- 6 840 280

## Beschreibung

Die Erfindung betrifft eine Vorrichtunge zur Beschallung von Flüssigkeiten mit Niederfrequenz-Leistungs-Ultraschall, bestehend aus einem Niederfrequenz-Leistungs-Ultraschall-System mit mindestens einer Sonotrode, die in ein Reaktorgefäß hineinragt, durch welches die Flüssigkeit über mindestens eine Einlass- und mindestens eine Auslassöffnung hindurchläuft.

Niederfrequenz-Leistungs-Ultraschall (NFLUS) ist Ultraschall mit einer Arbeitsfrequenz von 15 bis 100 kHz, vorzugsweise 15 bis 60 kHz, z.B. 20 kHz und einer Schallleistung über 10 W, vorzugsweise 100 W bis 20.000 W, z.B. 8.000 W. Zur Erzeugung des Ultraschalls werden beispielsweise piezoelektrische oder magnetostriktive Systeme verwendet. Es sind lineare Schallwandler und flächige oder gewölbte Plattenschwinger oder Rohrresonatoren bekannt. Niederfrequenz-Leistungs-Ultraschall findet eine große Anwendung in der Behandlung von Flüssigkeiten, wie z.B. Nahrungsmitteln, Kosmetika, Farben und Nanomaterialien. Die Wirkung von Niederfrequenz-Leistungs-Ultraschall auf behandelte Flüssigkeiten basiert überwiegend auf der in der Flüssigkeit erzeugten Kavitation. Beim Beschallen von Flüssigkeiten wird Kavitation erzeugt. Diese führt bekanntermaßen zum Verschleiß an der/den Fläche(n) der Sonotrode(n), welche Schwingungen mit höherer Amplitude (schwingungsübertragende Sonotrodenfläche) in das flüssige Medium übertragen. Dieser Materialabtrag des Sonotrodenmaterials, z.B. Titan, wird in die beschallte Flüssigkeit abgegeben. Der Verschleiß führt daher zu Austauschkosten für die Sonotroden und zu Verunreinigungen der zu beschallenden Flüssigkeit.

Zur Verringerung bzw. zur Unterdrückung des Verschleißes und des Materialabtrags sind aus der Vergangenheit verschiedene Verfahren bekannt.

Beispielsweise in WO 02/4 092 US 1005/260106 A1, US 6,505, 648 B1, DE 39 22 299 C1, DE 195 17 381 C1, US 6, 840,280 B1 und WO 2006/130237 A1 sind Vorrichtungen zur Beschallung von Flüssigkeiten mit Niederfrequenz-Leistungs-Ultraschall offenbart.

Nach DE 199 38 254.9 wird in einem mit Niederfrequenz-Leistungs-Ultraschall beschallten Reaktorgefäß ein Druck erzeugt, der die Kavitation in diesem Reaktorgefäß vollständig oder weitgehend unterdrückt. Dadurch wird der Verschleiß und der Materialabtrag erheblich oder vollständig vermindert. Es wird jedoch auch die Kavitationswirkung auf die Flüssigkeit erheblich oder vollständig vermindert.

Nach DE 10 2004 025 836 A1 ist ein Verfahren bekannt, mit dem der Kavitationsverschleiß an der schwingungsübertragenden Sonotrodenfläche selbst mittels einer Schicht zwischen Sonotrode und beschalltem Medium erheblich oder vollständig vermindert werden soll. Es ergibt sich jedoch ein Verschleiß an der schwingungsübertragenden Schicht, wodurch ein Nachführen/Austausch dieser Schicht erforderlich wird.

Bekannt sind auch Lösungen zur Fokussierung des Niederfrequenz-Leistungs-Ultraschalls auf einen Bereich, der weit entfernt ist von der schwingungsübertragenden Sonotrodenfläche. Nachteil ist hier die große räumliche Ausdehnung der Vorrichtung zur Fokussierung. Da zum Beispiel die Schallwellenlänge bei 20 kHz im Wasser ca. 60-80 mm beträgt und die sinnvolle Größe einer Linse mindestens das 10fache der Wellenlänge haben sollte, würde eine Ultraschalllinse zur Fokussierung einen Durchmesser von mehr als 600 mm haben. Außerdem stört die Kavitation das Schallfeld.

Aus WO 02/46092 A1 ist eine Einrichtung zur Aufspaltung von Wasser in Wasserstoff und Sauerstoff mit einer Ultraschalllinse bekannt. Die Sonotrode ist durch ein Diaphragma von dem zu behandelnden Wasser getrennt. Zweck der Fokussierung ist das Fernhalten von Kavitation am unteren Ende einer Trennwand zwischen Einlassbereich und Behandlungsbereich.

US 2005/260106 A1 zeigt eine Ultraschall-Behandlungseinrichtung mit konzentrisch angeordneten Ultraschallerregern, so dass die Kavitation in der Mittelachse des Gefäßes fokussiert wird. Damit soll Kavitation von der Innenwand des Kessels ferngehalten werden. Ausgenutzt wird ebenfalls eine Linsenwirkung.

Es ist möglich, Niederfrequenz-Leistungs-Ultraschall in eine Koppelflüssigkeit, wie z.B. Wasser einzutragen, siehe z. B. DE 102 43 837.4 Diese Koppelflüssigkeit überträgt die Schwingungen auf eine Gefäßwand, z.B. Glas, auf deren gegenüberliegender Seite sich die zu beschallende Flüssigkeit befindet. Dadurch kommt es zu einem Leistungsverlust und daher zu einer verminderten Intensität der Beschallung. Es ergibt sich ein Verschleiß/Abtrag an der schwingenden Gefäßwand.

Mit einer Beschichtung oder Oberflächenhärtung der schallübertragenden Fläche wird eine Verzögerung oder Verminderung des Verschleißes erreicht. Eine Beschichtung ist jedoch teuer und die Wirkung zeitlich begrenzt. Außerdem erfolgt ein Abtrag des aufgebrachten Materials in die Flüssigkeit.

Der Erfindung liegt die Aufgabe zugrunde, eine Vorrichtung anzugeben, mit denen eine erhebliche Verringerung von mehr als 50% bis hin zu einer vollständigen Unterdrückung der Kavitation an der im Nahbereich der schwingungsübertragenden Sonotrodenfläche und des damit verbundenen Verschleißes der schwingungsübertragenden Sonotrodenfläche möglich wird.

Erfindungsgemäß wird die Aufgabe gelöst durch die Merkmale des Anspruchs 1. Zweckmäßige Ausgestaltungen sind Gegenstand der Unteransprüche.

Im Folgenden angeführte Ausgestaltungen, die nicht in den Ansprüchen angegeben sind, fallen als solche nicht unter den Gegenstand der beanspruchten Erfindung, sondern sind hilfreich für deren Verständnis.

Danach wird in einem Nahbereich der schwingungsübertragenden Sonotrodenfläche(n) innerhalb des Reaktorgefäßes eine Druck/Amplitudenkombination nahe oder oberhalb der Druck-Amplituden-Kennlinie erzeugt, bei welcher Kavitation erheblich verringert oder vollkommen vermieden wird, und in dem anschließenden Bereich im Reaktorgefäß mindestens bereichsweise und mindestens zeitweise eine Druck/Amplitudenkombination unterhalb der Druck-Amplituden-Kennlinie erzeugt wird, bei welcher Kavitation erzeugt wird.

Die Kavitationsausbildung in Flüssigkeiten, wie z.B. Wasser oder Öl, und Emulsionen, Suspensionen oder Dispersionen hängt bei einer vorgegebenen Temperatur, z.B. 20°C, und vorgegebener Schallfrequenz, z.B. 20 kHz, von der Schwingungsamplitude A und dem Flüssigkeitsdruck p ab. Für jede Schwingungsamplitude A gibt es unter den o.g. Bedingungen einen maximalen Flüssigkeitsdruck pmax(A), über welchem das Entstehen von Kavitation vollständig unterdrückt wird, da bei p>pmax(A) die Flüssigkeit so an die schwingungsübertragende Sonotrodenfläche gepresst wird, dass das Auftreten von lokalen Vakuumbläschen ausgeschlossen ist. Umgekehrt gibt es daher für jeden Flüssigkeitsdruck p eine minimale Schwingungsamplitude Amin(p), unter welcher Kavitation ausgeschlossen ist.

Erfindungsgemäß ist die Einlassöffnung eine Hochdruckdüse, geeignet, um die Flüssigkeit in das Reaktorgefäß einzuleiten und unter einem Winkel von 5° bis 90° gegen die schwingungsübertragende Sonotrodenfläche zu leiten, wobei die Flüssigkeit unmittelbar auf die schwingungsübertragende Sonotrodenfläche trifft, und die Vorrichtung zur Beschallung von Flüssigkeiten so gestaltet ist, dass in einem an die Sonotrode angrenzenden Nahbereich der schwingungsubertragenden Sonotrodenfläche ein Druck oberhalb der Druck-Amplituden-Kennlinie herrscht, bei dem erheblich verminderte oder keine Kavitation auftritt, wenn der Druck zwischen einem maximalen Druck, über dem das Entstehen von Kavitation vollständig unterdrückt wird, und einem Druck von mehr als 70 % des maximalen Drucks, oder über dem maximalen Druck, gewählt ist, und
in einem sich an den Nahbereich anschließenden Bereich im Reaktorgefäß eine Druck/Amplitudenkombination unterhalb der Druck-Amplituden-Kennlinie aufrecht erhaltbar ist, bei welcher Kavitation erzeugt.

Nach einer nicht beanspruchten Variante ist der Querschnitt des Reaktorgefäßes durch mindestens eine Verengung so verringert, dass an der schwingungsübertragenden Sonotrodenfläche ein Nahbereich entsteht, in dem ein Druck nahe oder oberhalb der Druck-Amplituden-Kennlinie herrscht, bei dem erhebliche verringerte oder keine Kavitation auftritt.

Nach einer weiteren nicht beanspruchten Variante ist die wirksame Querschnittsfläche des Reaktorgefäßes im Abstand von der Sonotrodenfläche mindestens abschnittsweise kontinuierlich oder stufenweise abnehmend gestaltet.

Eine solche Vorrichtung kann einfach oder auch mehrfach in serieller Folge angeordnet sein oder aus einer Kombination der verschiedenen Varianten bestehen. Ebenso können gegebenenfalls einzelne Bauelemente mehrfach angeordnet sein, so etwa Düsen und/oder Sonotroden und/oder Einlässe und/oder Auslässe. Mehrere Sonotroden können dabei parallel oder gegenüberliegend angeordnet oder gemeinsam auf eine Kavitationszone gerichtet sein. Die Sonotroden können auch dezentral angeordnet oder schräg auf die Kavitationszone gerichtet sein. Ebenso können die Sonotroden schwingungsentkoppelnd gelagert sein und druckdichtend in das Reaktorgefäß hineinragen. Sonotroden mit nicht-planer Oberfläche, beispielsweise konkav oder konvex gewölbt, sind denkbar.

Der oder die Auslässe können seitlich angeordnet oder der Sonotrode gegenüberliegend platziert sein. Ein Auslass kann zusätzlich mit einer Drossel versehen sein, zum Beispiel mit einem Nadelventil oder einem Kugelhahn. Die Drossel kann manuell oder automatisch regelbar sein. Auch der Einlassdruck oder die Fließgeschwindigkeit können manuell oder automatisch geregelt werden. Dazu kann der Düsenabstand und/oder die Düsenöffnung regelbar sein. Einstellbar oder regelbar gestaltet kann auch ein Einsatz im Reaktorgefäß sein. Die Regelung kann in Abhängigkeit vom Druck im Reaktorgefäß oder in Abhängigkeit von der Leistung oder der Kavitationsbildung erfolgen.

Die Düsen können aus kavitationsresistenten Materialien bestehen oder entsprechend beschichtet sein. Ebenso die Sonotrode oder das Reaktorgefäß, letzteres gegebenenfalls nur an den verengten Stellen.

Die Länge des Reaktorgefäßes kann auf die Resonanzlänge abgestimmt sein.

Die zuführende Pumpe kann beispielsweise eine Zahnradpumpe oder eine Kreiselpumpe sein.

Die Maßnahmen eignen sich auch für Plattenschwinger, Rundtauchschwinger, Plattentauchschwinger und Wannen.

Die erfindungsgemäßen Maßnahmen haben den Vorteil, dass unmittelbar an der schwingungsübertragenden Sonotrodenfläche keine oder erheblich verminderte Kavitation, im weiteren Verlauf des Reaktorgefäßes dagegen für die Flüssigkeit wirksame Kavitation auftritt. Der Verschleiß an der schwingungsübertragenden Sonotrodenfläche wird auf diese Weise wirksam vermindert oder vollkommen vermieden.

Die Erfindung soll nachstehend anhand mehrerer Ausführungsbeispiele näher erläutert werden. In den zugehörigen Zeichnungen zeigen
- Figur 1: das Auftreten von Kavitation in Abhängigkeit vom Druck im Reaktorgefäß und von der Schwingungsamplitude einer Sonotrode,
- Figur 2: eine erste Variante einer erfindungsgemäßen Vorrichtung,
- Figur 3: eine ähnliche Variante wie nach Figur 2,
- Figur 4: einer zweite Art einer Vorrichtung,
- Figur 5: eine ähnliche Variante wie nach Figur 4,
- Figur 6: eine weitere Art einer Vorrichtung und
- Figur 7: eine ähnliche Variante wie nach Figur 6.

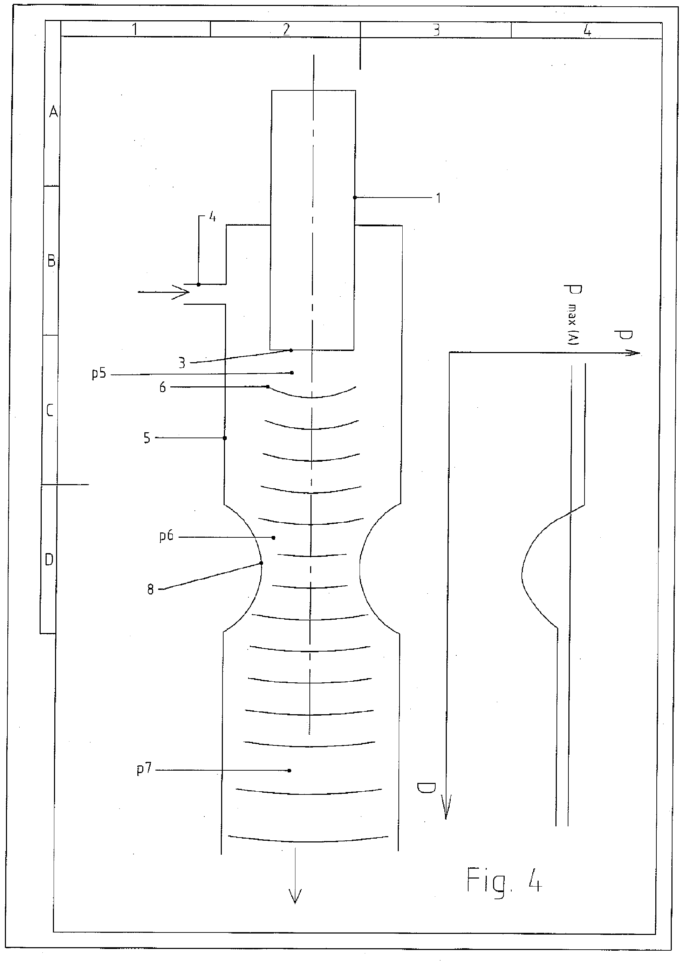

Die Beispiele der Figuren 4 bis 7 als solche fallen nicht unter den Gegenstand der beanspruchten Erfindung, sondern sind lediglich hilfreich für das Verständnis der beanspruchten Erfindung.

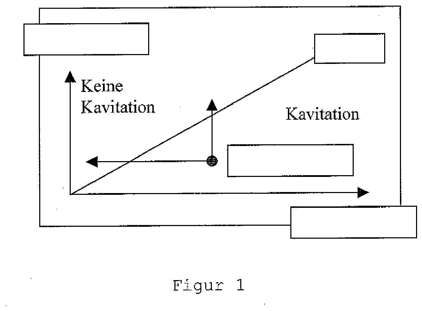

Die Darstellung in Figur 1 zeigt den schematischen Verlauf des Flüssigkeitsdrucks pmax(A), über welchem das Entstehen von Kavitation vollständig unterdrückt wird, da bei p>pmax(A) die Flüssigkeit so an die schwingungsübertragende Sonotrodenfläche gepresst wird, dass das Auftreten von lokalen Vakuumbläschen ausgeschlossen ist. Umgekehrt gibt es daher für jeden Flüssigkeitsdruck p eine minimale Schwingungsamplitude Amin(p), unter welcher Kavitation ausgeschlossen ist. Maximaler Flüssigkeitsdruck pmax(A) und minimale Schwingungsamplitude Amin(p) lassen sich empirisch für verschiedene Flüssigkeiten untersuchen. Als Messwert kann z.B. der Kavitationsabtrag an der schwingungsübertragenden Fläche oder die Hochfrequenzschallemission dienen. Letztere nutzt das Auftreten von Schwingungen im Megahertzbereich bei der Implosion von Kavitationsblasen.

Durch die Variation der Schwingungsamplitude A in verschiedenen Distanzen D von der schwingungsübertragenden Sonotrodenfläche oder durch die erfindungsgemäße Variation des Flüssigkeitsdruckes p in verschiedenen Distanzen D von der schwingungsübertragenden Sonotrodenfläche oder durch die Kombination beider Variationen wird erreicht, dass das Auftreten von Kavitation im oben beschriebenen Nahbereich erheblich verringert oder vollständig unterdrückt wird, während außerhalb dieses Nahbereichs im Schallfeld Kavitation zur Behandlung der Flüssigkeit ermöglicht wird. Dazu wird im Nahbereich erfindungsgemäß der Flüssigkeitsdruck p nahe, d.h. p>0,7*pmax(A) oder über pmax(A) gewählt, bzw. die Schwingungsamplitude A nahe, d.h. A<1.3*Amin(p) oder unter Amin(p) gewählt. Außerhalb des Nahbereichs im Schallfeld ist der Flüssigkeitsdruck unter pmax(A) bzw. steigt die Amplitude auf über Amin(p).

Der Nahbereich umfasst die Distanz D von 0 bis 50 mm, vorzugsweise 0-10 mm, z.B. im Bereich von 0-2 mm, vor der schwingungsübertragenden Sonotrodenfläche.

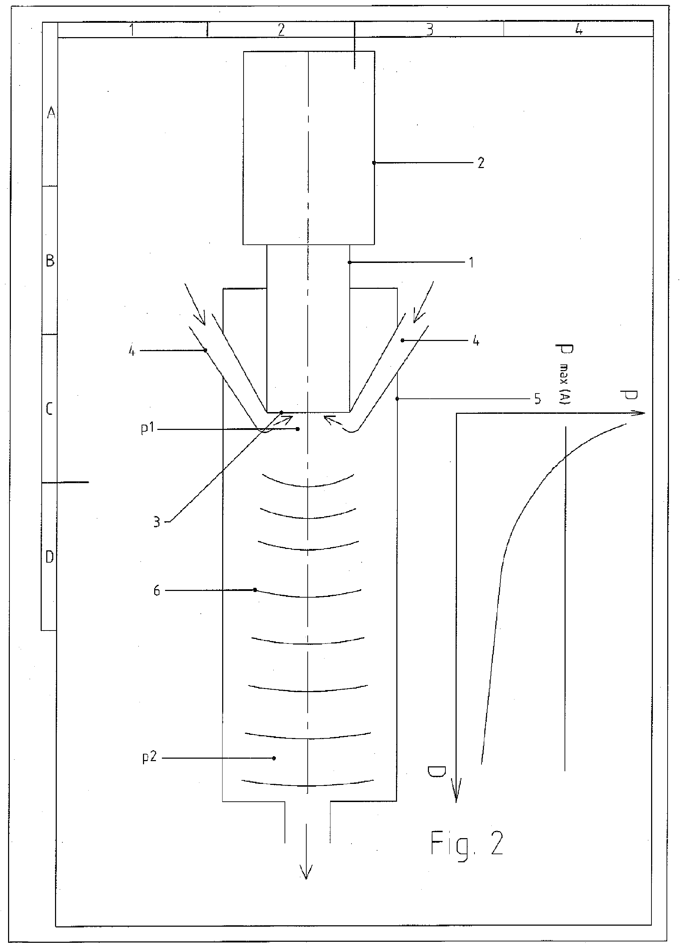

Die Variation der Schwingungsamplitude A in verschiedenen Distanzen D von der schwingungsübertragenden Sonotrodenfläche und die Variation des Flüssigkeitsdruckes p in verschiedenen Distanzen D von der schwingungsübertragenden Sonotrodenfläche und die Kombination beider Variationen lässt sich beispielsweise durch die in den Figuren 2 bis 7 gezeigten Vorrichtungen erreichen.

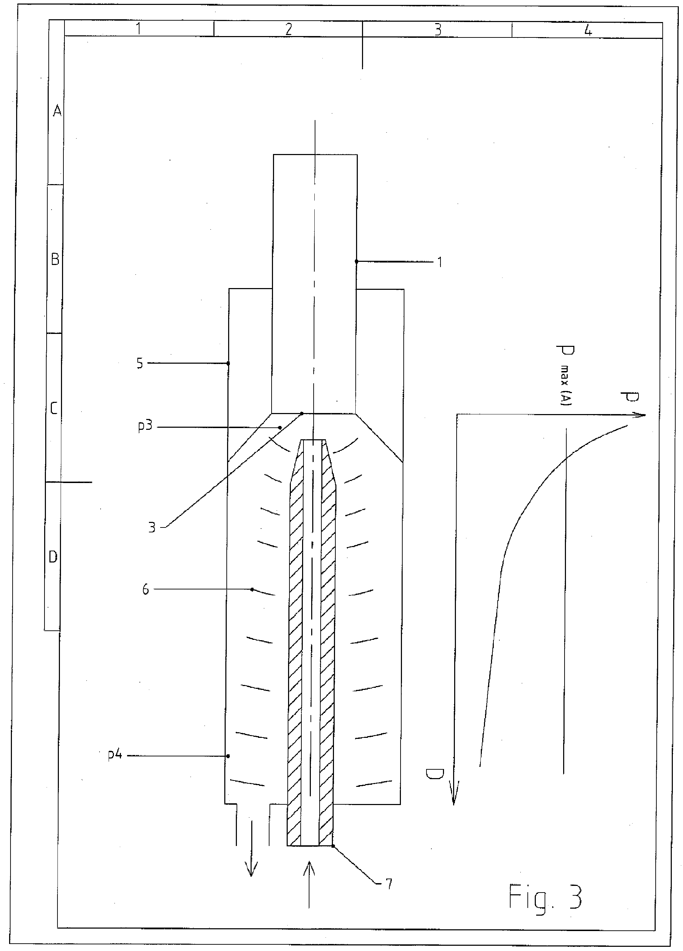

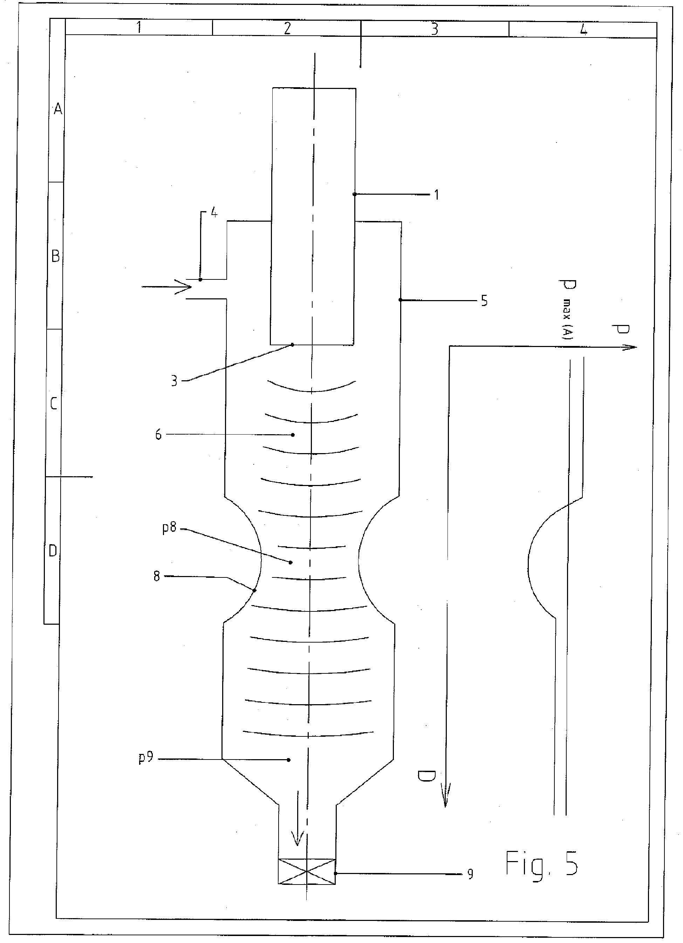

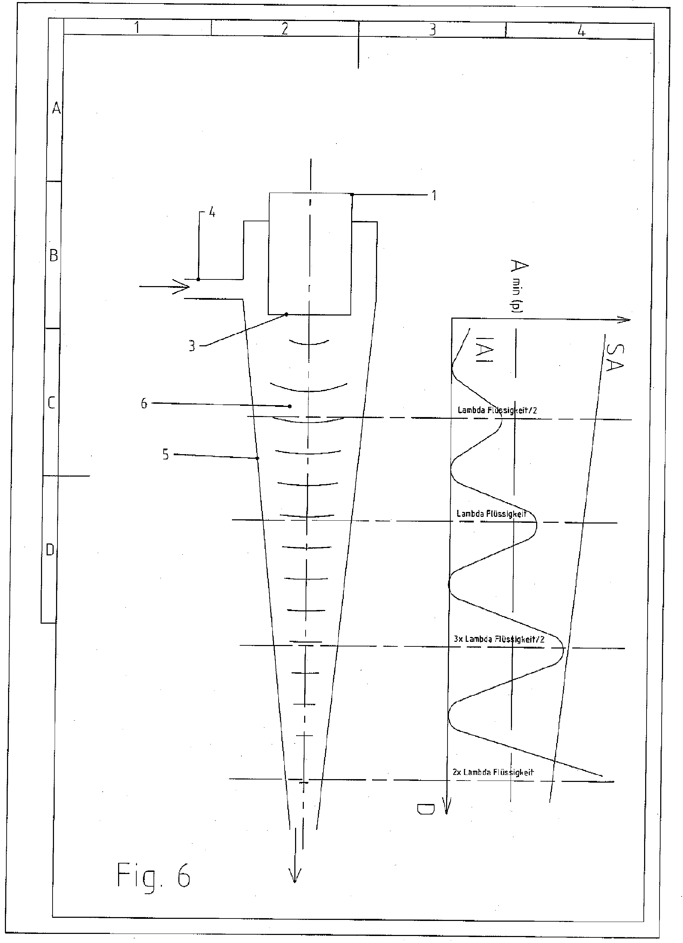

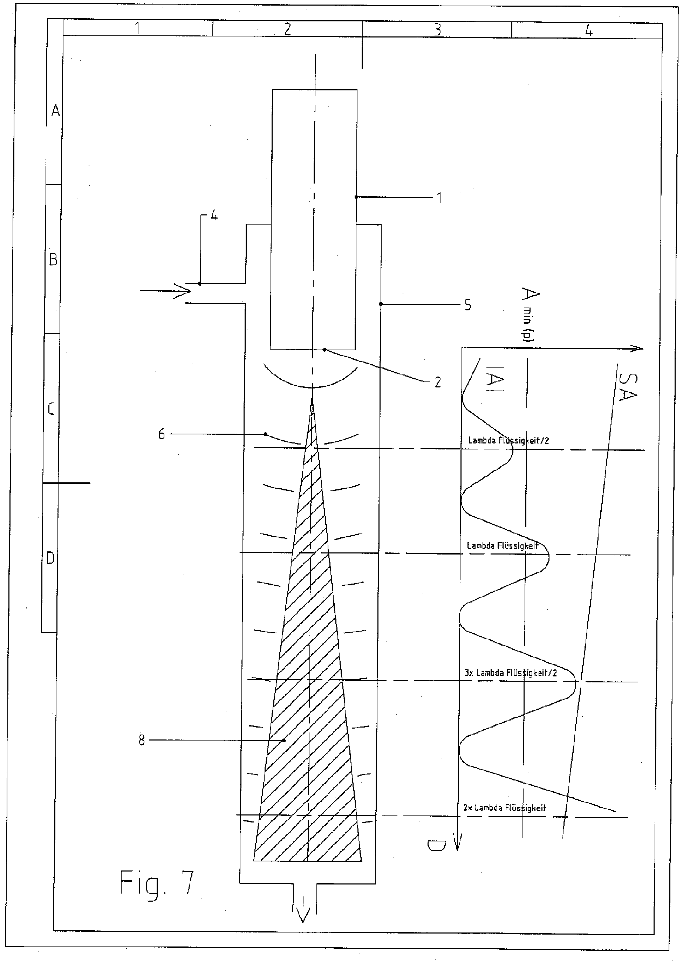

Die Vorrichtungen nutzen folgende Prinzipien:
- Druckerhöhung im Nahbereich der schwingungsübertragenden Sonotrodenfläche, dargestellt in den Figuren 2 + 3
- Querschnittsverringerung im Reaktor außerhalb des Nahbereichs der schwingungsübertragenden Sonotrodenfläche, dargestellt in dne Figuren 4 + 5
- Amplitudenverstärkung über das Medium außerhalb des Nahbereichs der schwingungsübertragenden Sonotrodenfläche, dargestellt in den Figuren 6 + 7

Möglich ist auch eine Kombination aus allen Prinzipien.

Allen Varianten in den Figuren 2 bis 7 gemein ist eine Sonotrode 1 eines Niederfrequenz-Leistungs-Ultraschall-Systems 2, die mit ihrer Sonotrodenfläche 3 in ein Reaktorgefäß 5 hineinragt. Die Zuführung eines Medium geschieht über eine geeignete Öffnung 4.

Im Reaktorgefäß 5 bildet sich beim Betrieb der Sonotrode 1 ein Schallfeld 6 aus.

Neben der Darstellung des Niederfrequenz-Leistungs-Ultraschall-Systems 2 ist jeweils der Verlauf des Drucks p über dem Abstand D von der Sonsotrodenfläche 3 gezeigt.

Figur 2 zeigt eine Vorrichtung, bei der durch die Zuführung des Mediums über die Öffnung 4, die hier als Ringdüse ausgebildet ist, der Druck p im Nahbereich der schwingungsübertragenden Sonotrodenfläche 3 auf den Wert p1 erhöht wird, so dass dort die Kavitation erheblich verringert oder vollständig vermieden wird. Außerhalb des Nahbereichs der schwingungsübertragenden Sonotrodenfläche 3 sinkt der Druck p auf den Wert p2 ab und es entsteht Kavitation im Schallfeld 6.

Die Vorrichtung wird mit Niederfrequenz-Leistungs-Ultraschall mit einer Arbeitsfrequenz von 15 bis 100 kHz, vorzugsweise 15-30 kHz, z.B.20 kHz, betrieben.

Dabei wird mit einer Schallleistung von 50-20.000 W, vorzugsweise 100-20.000 W, z.B. 8.000 W, gearbeitet. An der schwingungsübertragenen Sonotrodenfläche 3 wird eine Amplitude von 0-200 µm, vorzugsweise 10-100 µm, z.B. 10 µm, zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein Reaktorgefäß 5 mit 0-50 1 Inhalt, vorzugsweise 1-10 1, z.B. 5 1. Das Reaktorgefäß 5 kann aus verschiedenen Materialien bestehen, vorzugsweise Stahl, Aluminium oder veredelten Metallen, z.B. Edelstahl.

Das Medium, von zähflüssig bis dünnflüssig, vorzugsweise dünnflüssig, z.B. Wasser oder Öl, wird durch eine geeignete Öffnung 4, nämlich eine Hochdruckdüse, im oberen Bereich der Reaktorwand in das Reaktorgefäß 5 eingeleitet und gegen die schwingungsübertragende Sonotrodenfläche 3 gelenkt. Durch Auftreffen des Mediums auf die schwingungsübertragende Sonotrodenfläche 3 in einem Winkel zwischen 5 und 90°, vorzugsweise 20-80°, z.B. 45°, mit einem Druck p nahe oder über pmax(A) wird die Kavitation im Nahbereich der schwingungsübertragenen Sonotrodenfläche 3 erheblich verringert oder vollständig vermieden. Dieser Druck p kann z.B. 20 bar bei einer Schwingungsamplitude von 10 µm betragen. Die gewählte Sonotrode 1 ragt vorzugsweise mit einer Länge entsprechend Lambda/4 in das Reaktorgefäß 5 hinein, z.B. 60 mm.

Durch den Druckabfall im Reaktorgefäß 5 außerhalb des Nahbereichs der schwingungsübertragenden Sonotrodenfläche 3 wird der Wert pmax(A) unterschritten und ermöglicht somit die Kavitation im Reaktorgefäß 5 im Bereich außerhalb des Nahbereichs der schwingungsübertragenden Sonotrodenfläche 3. Zum Beispiel kann der Druck außerhalb des Nahbereichs der schwingungsübertragenden Sonotrodenfläche 3 auf 1,5 bar abfallen, so daß bei 10 µm Schwingungsamplitude in Wasser Kavitation möglich ist. Das beschallte Medium wird im unteren Bereich des Reaktorgefäßes 5 ausgeleitet, vorzugsweise an der Seitenwand oder dem unteren Boden, z.B. zentral am unteren Boden. Der Austritt des Mediums mit einem Druck p2 kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen, ausgewertet und zur Prozessoptimierung verwendet werden.

Diese Art der Anwendung kann mit einer beliebigen Anzahl von Sonotroden 1 in einem Reaktorgefäß 5, z.B. mit einer einzelnen Sonotrode 1, vorzugsweise mit bis zu fünf Sonotroden 1, vollzogen werden.

Der Pumpdruck kann in Abhängigkeit von dem notwendigen Druck pmax(A) durch die Auswahl geeigneter Pumpen, z.B. mittels einer regelbaren Zahnradpumpe, hergestellt werden.

Figur 3 zeigt eine Vorrichtung, bei der durch eine geeignete Zuführung des Mediums, hier als Zentraldüse 7 ausgebildet, der Druck p auf den Wert p3 im Nahbereich der schwingungsübertragenden Sonotrodenfläche 3 erhöht wird, so daß dort die Kavitation erheblich verringert oder vollständig vermieden wird. Außerhalb des Nahbereichs der schwingungsübertragenden Sonotrodenfläche 3 sinkt der Druck p auf den Wert p4 ab und es entsteht Kavitation im Schallfeld 6.

Die Vorrichtung wird mit Niederfrequenz-Leistungs-Ultraschall mit einer Arbeitsfrequenz von 15 bis 100 kHz, vorzugsweise 15-30 kHz, z.B. 20 kHz, betrieben.

Dabei wird mit einer Schallleistung von 50-20.000 W, vorzugsweise 100-20.000 W, z.B. 8.000 W, gearbeitet. An der schwingungsübertragenen Sonotrodenfläche 3 wird eine Amplitude von 0-200 µm, vorzugsweise 10-100 µm, z.B. 20 µm, zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein Reaktorgefäß 5 mit 0-50 1 Inhalt, vorzugsweise 1-10 1, z.B. 5 1. Das Reaktorgefäß 5 kann aus verschiedenen Materialien bestehen, vorzugsweise Stahl, Aluminium, veredelten Metallen oder Keramik.

Das Medium, von zähflüssig bis dünnflüssig, vorzugsweise dünnflüssig, z.B. Öl, wird durch eine Düse, z.B. eine Hochdruckdüse, eine Leitung oder eine Spezialzuführung zentral durch den Reaktorboden in den Nahbereich der schwingungsübertragenden Sonotrodenfläche 3 eingeleitet. Durch Auftreffen des Mediums auf die schwingungsübertragende Sonotrodenfläche 3 in einem frei wählbaren Winkel, z.B. 90°, mit einem Druck p nahe oder über pmax(A), z.B. 50 bar, wird die Kavitation im Nahbereich der schwingungsübertragenen Sonotrodenfläche 3 erheblich verringert oder vollständig vermieden.

Die gewählte Sonotrode 1 ragt vorzugsweise mit einer Länge entsprechend Lambda/4 in das Reaktorgefäß 5 hinein, z.B. 60 mm.

Durch den Druckabfall im Reaktorgefäß 5 außerhalb des Nahbereichs der schwingungsübertragenden Sonotrodenfläche 3 wird der Wert pmax(A) unterschritten und ermöglicht somit die Kavitation im Reaktorgefäß 5 im Schallfeld 6. Der Druck p im Reaktorgefäß 5 außerhalb des Nahbereichs kann z.B. 5 bar betragen.

Das beschallte Medium wird im unteren Bereich des Reaktorgefäßes 5 ausgeleitet, vorzugsweise an der Seitenwand oder dem unteren Boden, z.B. dezentral am unteren Boden. Der Austritt des Mediums mit dem Druck p4 kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen ausgewertet und zur Prozessoptimierung verwendet werden. Diese Art der Anwendung kann mit einer beliebigen Anzahl von Sonotroden 1 in einem Reaktorgefäß 5, z.B. mit einer einzelnen Sonotrode 1, vorzugsweise mit bis zu fünf Sonotroden 1, vollzogen werden.

Figur 4 zeigt eine weitere Variante einer Vorrichtung, bei welcher in der durchströmenden Flüssigkeit, durch eine Querschnittreduzierung außerhalb des Nahbereichs eine Druckreduzierung im Schallfeld 6 erzeugt wird, so dass an dieser Stelle Kavitation auftritt, während im Nahbereich der schwingungsübertragenden Sonotrodenfläche 3 die Kavitation erheblich verringert oder vollständig vermieden wird. Die beispielhafte Vorrichtung der Figur 4 ist lediglich hilfreich für das Verständnis, jedoch nicht Teil der beanspruchten Erfindung.

Die Vorrichtung wird mit Niederfrequenz-Leistungs-Ultraschall mit einer Arbeitsfrequenz von 15 bis 100 kHz, vorzugsweise 15-30 kHz, z.B.19 kHz, betrieben.

Dabei wird mit einer Schallleistung von 50-20.000 W, vorzugsweise 100-20.000 W, z.B. 8.000 W, gearbeitet. An der schwingungsübertragenen Sonotrodenfläche 3 wird eine Amplitude von 0-200 µm, vorzugsweise 10-100 µm, z.B. 20 µm zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein zylinderförmiges Reaktorgefäß 5 mit 0-50 1 Inhalt, vorzugsweise 1-10 1, z.B. 5 1. Das Reaktorgefäß 5 kann aus den verschiedensten Materialien bestehen, vorzugsweise Stahl, Aluminium, veredelten Metallen, z.B. Titan. Zentral oder dezentral im Inneren des Reaktorgefäßes 5 ist eine Querschnittsverengung 8 angeordnet, welche beim Durchströmen der Flüssigkeit eine lokale Druckabsenkung nach dem Venturiprinzip zur Folge hat. Die Querschnittsverengung 8 kann in Ausmaß, Form und Höhe im Reaktorgefäß 5 variieren. Das Medium, von zähflüssig bis dünnflüssig, vorzugsweise dünnflüssig, z.B. Farbe, wird durch eine geeignete Öffnung 4, vorzugsweise eine Düse, z.B. eine Standarddüse, Leitungen oder Spezialzuführungen durch den oberen Bereich der Reaktorwand in den Nahbereich der schwingungsübertragenden Sonotrodenfläche 3 eingeleitet. Durch Einleiten des Mediums mit einem Drück p nahe oder über dem Druck pmax (A) des Mediums, entsteht im Nahbereich der schwingungsübertragenden Sonotrodenfläche 3 erheblich verringerte oder keine Kavitation.

Die gewählte Sonotrode 1 ragt z.B. mit einer Länge entsprechend Lambda/4 in den Reaktor hinein, z.B. 60 mm.

Durch die Querschnittsverengung 8 im Inneren des Reaktorgefäßes 5 staut sich das Medium vor Erreichen des kleinsten Durchmessers an der Querschnittsverengung 8. Der Druck p im Reaktorgefäß 5 ist somit oberhalb dieses Punktes zu hoch, um ein Kavitieren des Mediums zu ermöglichen. Der Nahbereich der schwingungsübertragenden Sonotrodenfläche 3 erfährt damit erheblich verringerte oder keine Kavitation. Unterhalb der Querschnittsverengung 8 findet nach dem Venturiprinzip eine Entspannung, das heißt eine Druckreduzierung durch Entspannung des Mediums statt, wodurch eine Kavitation möglich wird. Der Druck p ist in diesem Bereich unter dem Wert pmax(A). Das beschallte Medium wird im unteren Bereich des Reaktorgefäßes 5 ausgeleitet, vorzugsweise zentral am unteren Boden oder an der unteren Seitenwand des zylinderförmigen Reaktorgefäßes 5. Der Austritt des Mediums kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen, ausgewertet und zur Prozessoptimierung verwendet werden.

Diese Art der Anwendung kann mit einer beliebigen Anzahl von Sonotroden in einem Reaktorgefäß 5, z.B. mit einer einzelnen Sonotrode 1, vorzugsweise mit bis zu fünf Sonotroden 1 vollzogen werden. Alternativ kann bei entsprechendem Abstand der Querschnittsverengung 8 von der Sonotrode 1 die Fließrichtung auch umgekehrt werden, solange die lokale Druckabsenkung infolge des Venturiprinzips außerhalb des Nahbereichs der schwingungsübertragenden Sonotrodenfläche 3 erfolgt.

Figur 5 zeigt eine ähnliche Vorrichtung, bei welcher in der durchströmenden Flüssigkeit durch die Querschnittreduzierung 8 außerhalb des Nahbereichs eine Druckreduzierung im Schallfeld 6 erzeugt wird, so dass an dieser Stelle Kavitation auftritt, während im Nahbereich der schwingungsübertragenden Sonotrodenfläche 3 die Kavitation erheblich verringert oder vollständig vermieden wird. Durch eine zusätzlich eingebaute Drosselung 9 wird ein statischer Gegendruck erzeugt, der höhere mechanische Amplituden der Sonotrode 1 ermöglicht. Die beispielhafte Vorrichtung der Figur 5 ist lediglich hilfreich für das Verständnis, jedoch nicht Teil der beanspruchten Erfindung.

Die Vorrichtung wird mit Niederfrequenz-Leistungs-Ultraschall mit einer Arbeitsfrequenz von 15 bis 100 kHz, vorzugsweise 15-30 kHz, z.B. 17 kHz, betrieben.

Dabei wird mit einer Schallleistung von 50-20.000 W, vorzugsweise 100-20.000 W, z.B. 16.000 W, gearbeitet. An der schwingungsübertragenen Sonotrodenfläche 3 wird eine Amplitude von 0-200 µm, vorzugsweise 10-100 µm, z.B. 15 µm, zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein zylinderförmiges, am Ende konisch zulaufendes Reaktorgefäß 5 mit 0-50 1 Inhalt, vorzugsweise 1-10 1, z.B. 3 1. Das Reaktorgefäß 5 kann aus verschiedenen Materialien bestehen, vorzugsweise Stahl, Aluminium, veredelten Metallen oder Glas. Die Querschnittsverengung 8 ist zentral oder dezentral im Inneren des Reaktorgefäßes 5 angeordnet, welche beim Durchströmen der Flüssigkeit eine lokale Druckabsenkung nach dem Venturiprinzip zu Folge hat. Die Querschnittsverengung 8 kann in Ausmaß, Formgebung, Material und Höhe im Reaktorgefäß 5 variieren. Das Medium, von zähflüssig bis dünnflüssig, vorzugsweise dünnflüssig, z.B. Rapsöl, wird durch eine geeignete Öffnung 4, vorzugsweise eine Düse, z.B. eine Standarddüse, eine Leitung oder Spezialzuführungen durch den oberen Bereich der Reaktorwand in den Nahbereich der schwingungsübertragenden Sonotrodenfläche 3 eingeleitet. Durch Einleiten des Mediums mit einem Druck nahe oder über dem Druck pmax (A) des Mediums entsteht im Nahbereich der schwingungsübertragenden Sonotrodenfläche 3 erheblich verringerte oder keine Kavitation. Die gewählte Sonotrode 1 ragt z.B. mit einer Länge entsprechend Lambda/4 in das Reaktorgefäß 5 hinein, z.B. 60 mm.

Durch die Querschnittsverengung 8 im Inneren des Reaktorgefäßes 5 staut sich das Medium vor Erreichen des kleinsten Durchmessers. Der Druck p im Reaktorgefäß 5 ist somit oberhalb dieses Punktes zu hoch um ein Kavitieren des Mediums zu ermöglichen. Der Nahbereich der schwingungsübertragenden Sonotrodenfläche 3 erfährt somit erheblich verringerte oder keine Kavitation. Unterhalb des kleinsten Querschnitts findet nach dem Venturiprinzip eine Entspannung, das heißt eine Druckreduzierung des Mediums statt, wodurch eine Kavitation möglich wird. Der Druck p ist unter dem Wert pmax(A). Das beschallte Medium wird im unteren Bereich des Reaktorgefäßes 5 ausgeleitet, vorzugsweise zentral am unteren Boden oder an der unterein Seitenwand des zylinderförmigen Reaktorgefäßes 5. Der Austritt des Mediums kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen, ausgewertet und zur Prozessoptimierung verwendet werden. Durch die zusätzlich eingebaute Drosselung 9 wird ein statischer Gegendruck erzeugt, der höhere mechanische Amplituden der Sonotrode 1 ermöglichen kann. Diese Art der Anwendung kann mit einer beliebigen Anzahl von Sonotroden 1 in einem Reaktorgefäß 5, z.B. mit einer einzelnen Sonotrode 1, vorzugsweise mit bis zu fünf Sonotroden 1, vollzogen werden. Alternativ kann bei entsprechendem Abstand der Querschnittsverengung 8 von der Sonotrode 1 die Fließrichtung auch umgekehrt werden, solange die lokale Druckabsenkung infolge des Venturiprinzips außerhalb des Nahbereichs der schwingungsübertragenden Sonotrodenfläche 3 erfolgt.

Figur 6 zeigt eine weitere Variante einer Vorrichtung, bei der durch eine geeignete Dimensionierung des Reaktors, hier als konisch zulaufendes Reaktorgefäß 5, eine kontinuierliche Amplitudenerhöhung im Medium außerhalb des Nahbereichs der schwingungsübertragenden Sonotrodenfläche 3 ermöglicht wird, so dass dort die Kavitation erheblich verringert oder vollständig vermieden wird, während außerhalb des Nahbereichs der schwingungsübertragenden Sonotrodenfläche 3 Kavitation auftritt. Die beispielhafte Vorrichtung der Figur 6 ist lediglich hilfreich für das Verständnis, jedoch nicht Teil der beanspruchten Erfindung.

Die Länge des Reaktorgefäßes sollte dabei vorzugsweise n*λ(Flüssigkeit)/2(n∃1), hier 4*λ(Flüssigkeit)/2 betragen. Die Fliessrichtung und -geschwindigkeit bei langsam fließenden Medien ist dabei unerheblich. Im Einzelfall kann auf einen Durchfluss verzichtet werden. Eine bevorzugte Form des Reaktors 5 ist z.B. eine Expotentialform oder eine abgestufte Variation des Querschnitts. Die Vorrichtung wird mit Niederfrequenz-Leistungs-Ultraschall mit einer Arbeitsfrequenz von 15 bis 100 kHz, vorzugsweise 15-30 kHz, z.B. 20 kHz, betrieben. Dabei wird mit einer Schallleistung von 50-20.000 W, vorzugsweise 100-20.000 W, z.B. 8.000 W gearbeitet. An der schwingungsübertragenen Sonotrodenfläche 3 wird eine Amplitude von 0-200 µm, vorzugsweise 10-100 µm, z.B. 20 µm, zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein Reaktorgefäß 5 mit 0-50 1 Inhalt, vorzugsweise 1-10 1, z.B. 4 1. Das Reaktorgefäß 5 kann aus den verschiedensten Materialien bestehen, vorzugsweise Stahl, Aluminium, veredelten Metallen, z.B. Hasteloy. Es kann in Richtung Reaktorboden in verschiedenen Winkeln kegelstumpfförmig zulaufen, vorzugsweise in einem spitzen Winkel, z.B. 15°. Das Medium, von zähflüssig bis dünnflüssig, vorzugsweise dünnflüssig, z.B. Diesel, wird durch eine geeignete Öffnung 4, vorzugsweise eine Düse, z.B. eine Standarddüse, eine Leitung oder Spezialzuführungen durch den oberen Bereich der Reaktorwand in den Nahbereich der schwingungsübertragenden Sonotrodenfläche 3 eingeleitet. Durch Einleiten des Mediums unter einem zur Kavitation nötigen Druck p des Mediums entsteht im Nahbereich der schwingungsübertragenden Sonotrodenfläche 3 erheblich verringerte oder keine Kavitation. Die gewählte Sonotrode 1 ragt vorzugsweise mit einer Länge entsprechend Lambda/4 in das Reaktorgefäß 5 hinein, z.B. 60 mm.

Durch die bauartbedingte Querschnittsverjüngung des Reaktors erhöht sich die Amplitude außerhalb des Nahbereichs der schwingungsübertragenden Sonotrodenfläche 3 im Verhältnis zur Fläche über den Wert Amin(p), z.B. um den Faktor 10. In diesem Bereich entsteht Kavitation. Dieser Wert wird jeweils in Lambda-Halbe-Schritten überstiegen. Dadurch können einzelne oder mehrfache Kavitationszonen im Reaktorgefäß 5 entstehen. Die Anzahl, Form und Größe der Kavitationszonen ist bauartbedingt. Das beschallte Medium wird im unteren Bereich des Reaktorgefäßes 5 ausgeleitet, vorzugsweise zentral am unteren Boden des kegelstumpfförmigen Reaktorgefäßes 5. Der Austritt des Mediums kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen ausgewertet und zur Prozessoptimierung verwendet werden. Diese Art der Anwendung kann mit einer beliebigen Anzahl von Sonotroden 1 in einem Reaktorgefäß 5, z.B. mit einer einzelnen Sonotrode 1, vorzugsweise mit bis zu fünf Sonotroden 1, vollzogen werden.

Figur 7 zeigt eine Vorrichtung wie unter Figur 6 beschrieben, nur mit einer anderen Gestaltung des Reaktorgefäßes 5. Hier ist ein Kegel 10 in einem zylindrischen Reaktorgefäß 5 vorhanden. Die beispielhafte Vorrichtung der Figur 7 ist lediglich hilfreich für das Verständnis, jedoch nicht Teil der beanspruchten Erfindung.

Die Vorrichtung wird mit Niederfrequenz-Leistungs-Ultraschall mit einer Arbeitsfrequenz von 15 bis 100 kHz, vorzugsweise 15-30 kHz, z.B. 20 kHz, betrieben. Dabei wird mit einer Schallleistung von 50-20.000 W, vorzugsweise 100-20.000 W, z.B. 8.000 W gearbeitet. An der schwingungsübertragenen Sonotrodenfläche 3 wird eine Amplitude von 0-200 µm, vorzugsweise 10-100 µm, z.B. 10 µm, zur Übertragung des Schalls an die Flüssigkeit genutzt. Die schwingende Sonotrode 1 wird gegenüber dem Reaktorgefäß 5 mittels einer druckdichten Dichtung wie einem O-Ring und einem schwingungsentkoppelnden Flansch abgedichtet. Verwendet wird ein Reaktorgefäß 5 mit 0-50 1 Inhalt, vorzugsweise 1-10 1, z.B. 5 1. Das Reaktorgefäß 5 kann aus den verschiedensten Materialien bestehen, vorzugsweise Stahl, Aluminium, veredelten Metallen oder einem Polymer. Der Kegel 10 ist zentral im Inneren des Reaktorgefäßes 5 angeordnet, welcher aus verschiedenen Materialien bestehen kann, vorzugsweise Metallen, Nichtmetallen oder Keramik. Der Kegel 10 läuft in Richtung der schwingungsübertragenden Sonotrodenfläche 3 spitz zu, vorzugsweise in einem Winkel zwischen 5° und 30°, z.B. 15°. Dadurch wird eine Querschnittsverringerung in zunehmendem Abstand D von der Sonotrode 1 erzeugt, welche bei entsprechender Auslegung in einer Amplitudenverstärkung innerhalb des flüssigen Mediums resultiert. Das Medium, von zähflüssig bis dünnflüssig, vorzugsweise dünnflüssig, z.B. eine Emulsion, wird durch eine geeignete Öffnung 4, vorzugsweise eine Düse, z.B. eine Standarddüse, eine Leitung oder Spezialzuführungen durch den oberen Bereich der Reaktorwand in den Nahbereich der schwingungsübertragenden Sonotrodenfläche 3 eingeleitet. Die Fliessrichtung und -geschwindigkeit bei langsam fließenden Medien ist dabei unerheblich. Im Einzelfall kann auf einen Durchfluss verzichtet werden. Durch Einleiten des Mediums unter dem zur Kavitation nötigen Druck p des Mediums entsteht im Nahbereich der schwingungsübertragenden Sonotrodenfläche 3 erheblich verringerte oder keine Kavitation. Die gewählte Sonotrode 1 ragt vorzugsweise mit einer Länge entsprechend Lambda/4 in den Reaktor hinein, z.B. 60 mm. Durch die bauartbedingte Querschnittsverjüngung des Reaktors erhöht sich die Amplitude außerhalb des Nahbereichs der schwingungsübertragenden Sonotrodenfläche 3 im Verhältnis zur Fläche über den Wert Amin(p), z.B. um den Faktor 10. In diesem Bereich entsteht Kavitation. Dieser Wert wird jeweils in Lambda-Halbe-Schritten überstiegen. Dadurch können einzelne oder mehrfache Kavitationszonen im Reaktorgefäß 5 entstehen. Die Anzahl, Form und Größe der Kavitationszonen ist bauartbedingt. Das beschallte Medium, wird im unteren Bereich des Reaktorgefäßes 5 ausgeleitet, vorzugsweise zentral am unteren Boden des kegelstumpfförmigen Reaktorgefäßes 5. Der Austritt des Mediums kann geregelt oder ungeregelt erfolgen, z.B. geregelt, um Einfluss auf den Druck p innerhalb der Zelle nehmen zu können. Werte des Mediums innerhalb bzw. außerhalb des Nahbereichs können über verschiedene Sensoren, z.B. Drucksensoren, aufgenommen, ausgewertet und zur Prozessoptimierung verwendet werden. Diese Art der Anwendung kann mit einer beliebigen Anzahl von Sonotroden 1 in einem Reaktorgefäß 5, z.B. mit einer einzelnen Sonotrode 1, vorzugsweise mit bis zu fünf Sonotroden 1, vollzogen werden.

### Liste der Bezugszeichen

- 1: Sonotrode
- 2: Niederfrequenz-Leistungs-Ultraschall-System
- 3: Sonotrodenfläche
- 4: Öffnung
- 5: Reaktorgefäß
- 6: Schallfeld
- 7: Zentraldüse
- 8: Querschnittsverengung
- 9: Drosselung
- 10: Kegel
- P: Druck
- A: Schwingungsamplitude

## Patentansprüche

1. Vorrichtung zur Beschallung von Flüssigkeiten mit Niederfrequenz-Leistungs-Ultraschall, bestehend aus einem Niederfrequenz-Leistungs-Ultraschall-System (2) mit mindestens einer Sonotrode (1), die in ein Reaktorgefäß (5) hineinragt, durch welches die Flüssigkeit über mindestens eine Einlassöffnung (4) und mindestens eine Auslassöffnung hindurchläuft,
**dadurch gekennzeichnet, dass**
die Einlassöffnung (4) eine Hochdruckdüse ist, geeignet, um die Flüssigkeit in das Reaktorgefäß (5) einzuleiten und unter einem Winkel von 5° bis 90° gegen die schwingungsübertragende Sonotrodenfläche (3) zu leiten, dass die Flüssigkeit unmittelbar auf die schwingungsübertragende Sonotrodenfläche (3) trifft, und die Vorrichtung zur Beschallung von Flüssigkeiten so gestaltet ist, dass in einem an die Sonotrode (1) angrenzenden Nahbereich der schwingungsübertragenden Sonotrodenfläche (3) ein Druck (p) oberhalb der Druck-Amplituden-Kennlinie herrscht, bei dem erheblich verminderte oder keine Kavitation auftritt, wenn der Druck (p) zwischen einem maximalen Druck, über dem das Entstehen von Kavitation vollständig unterdrückt wird, und einem Druck von mehr als 70 % des maximalen Drucks, oder über dem maximalen Druck, gewählt ist, und
in einem sich an den Nahbereich anschließenden Bereich im Reaktorgefäß eine Druck/Amplitudenkombination unterhalb der Druck-Amplituden-Kennlinie aufrecht erhaltbar ist, bei welcher Kavitation erzeugt wird.

2. Vorrichtung nach Anspruch 1, **dadurch gekennzeichnet, dass** die Einlassöffnung (4) durch eine Ringdüse realisiert ist.

3. Vorrichtung nach Anspruch 1, **dadurch gekennzeichnet, dass** die Einlassöffnung (4) durch eine Zentraldüse (7) realisiert ist.

4. Vorrichtung nach Anspruch 3, **dadurch gekennzeichnet, dass** die Zentraldüse (7) im rechten Winkel zur schwingungsübertragende Sonotrodenfläche (3) angeordnet ist.

## Claims

1. Device for sonicating liquids with low-frequency high energy ultrasound, consisting of a low-frequency high energy ultrasound system (2) having at least one sonotrode (1), which projects into a reactor vessel (5) through which the liquid passes via at least one inlet orifice (4) and at least one outlet orifice,
**characterized in that**
the inlet orifice (4) is a high-pressure nozzle adapted to inject the liquid into the reactor vessel (5) and to guide it at an angle of 5° to 90° against the oscillation-transducing sonotrode (3), **in that** the liquid impinges directly on the oscillation-transducing sonotrode surface (3), and **in that** the device for sonicating liquids is designed in such a manner that, in a close region of the oscillation-transducing sonotrode surface (3) adjacent to the sonotrode (1), a pressure (p) above the pressure-amplitude characteristic line prevails, at which a considerably reduced cavitation or no cavitation occurs when the pressure (p) is chosen to be between a maximum pressure, above which the generation of cavitation is completely suppressed, and a pressure of more than 70 % of the maximum pressure, or above the maximum pressure, and in a region adjacent to the close region within the reactor vessel, a pressure/amplitude combination can be maintained below the pressure-amplitude characteristic line at which cavitation is generated.

2. Device according to claim 1, **characterized in that** the inlet orifice (4) is implemented as an annular nozzle.

3. Device according to claim 1, **characterized in that** the inlet orifice (4) is implemented as a central nozzle (7).

4. Device according to claim 3, **characterized in that** the central nozzle (7) is arranged at a right angle with respect to the oscillation-transducing sonotrode surface (3).

## Revendications

1. Dispositif pour l'irradiation aux ultrasons de liquides à l'aide d'ultrasons basse fréquence, consistant en un système d'ultrasons basse fréquence (2) ayant au moins une sonotrode (1) qui fait saillie dans une cuve de réaction (5) par laquelle le liquide passe via au moins un orifice d'entrée (4) et au moins un orifice de sortie,
**caractérisé en ce que**
l'orifice d'entrée (4) est une buse haute pression adaptée pour introduire le liquide dans la cuve de réaction (5) et pour le guider contre la surface (3) de la sonotrode transmettant des vibrations sous un angle de 5° à 90°, que le liquide frappe directement la surface (3) de la sonotrode transmettant des vibrations, et que le dispositif pour l'irradiation aux ultrasons de liquides est conçu de telle manière que, dans une zone de proximité de la surface (3) de la sonotrode transmettant des vibrations qui est adjacente à la sonotrode (1), il règne une pression (p) supérieure à la courbe caractéristique pression-amplitude sous laquelle il y a une cavitation considérablement réduite ou il n'y a pas de cavitation lorsque la pression (p) est sélectionnée de manière à se situer entre une pression maximale au-dessus de laquelle la génération de cavitation est supprimée complètement et une pression supérieure à 70 % de la pression maximale, ou au-dessus de la pression maximale, et que,
dans une zone adjacente à la zone de proximité située dans la cuve de réaction, il peut être maintenu une combinaison de pression et d'amplitude inférieure à la courbe caractéristique pression-amplitude sous laquelle une cavitation est générée.

2. Dispositif selon la revendication 1, **caractérisé en ce que** l'orifice d'entrée (4) est réalisé sous forme de buse annulaire.

3. Dispositif selon la revendication 1, dans lequel l'orifice d'entrée (4) est réalisé sous forme de buse centrale (7).

4. Dispositif selon la revendication 3, **caractérisé en ce que** la buse centrale (7) est disposée à angle droit par rapport à la surface (3) de la sonotrode transmettant des vibrations.
